# EUROPEAN PATENT APPLICATION

(11) **EP 1 235 299 A1**
(43) Date of publication of application: **28.08.2002**
(21) Application number: 00976260.0
(22) Date of filing: 15.11.2000
(51) Int. Cl.: H01Q 1/24

(54) **MOBILE SATELLITE COMMUNICATION TERMINAL AND METHOD FOR USING THE SAME**

(30) Priority: 17.11.1999 JP 32720099
(71) Applicant: NEC Corporation, Minato-ku, Tokyo 108-8001 (JP)
(72) Inventor: MOCHIZUKI, Takuji, Minato-ku, Tokyo 108-8001 (JP)
(74) Representative: VOSSIUS & PARTNER
(86) International application number: JP0008051
(87) International publication number: WO01037368

(57) **Abstract**

There are provided a mobile satellite communication terminal and a method of using the same in which the dual-mode communication can be conducted by one terminal, and the antennas of both modes are housed and arranged on one axis in a configuration simpler than that of the prior art to thereby reduce the volume also when the user carries about the terminal. The satellite antenna 6 is configured in a shape of a hollow cylinder and the ground antenna 5 is arranged in a hollow section thereof, the satellite antenna 6 is configured to be housed into/to be drawn from a terminal housing, and there are also configured a 4-wire helical antenna element section 61 in which a conductor wire 611 is helically wound on a cylinder surface and an antenna feeder section 62 which is integrally disposed in a lower section of the 4-wire helical antenna element section 61 and in which circuits 621, 622, and 623 are formed on a cylinder surface.

## Description

The present invention relates to a mobile satellite communication terminal and a method of using the same, and in particular, to a mobile satellite communication terminal and a method of using the same suitably applicable in a case in which the terminal has simpler structure and smaller volume also when the user carries about the terminal as compared with the prior art.

### RELATED ART

Heretofore, a satellite communication terminal of dual-mode type has been developed for practical uses, the terminal having a ground terminal function to conduct communication via a base station on the earth and a satellite terminal function to conduct communication via a satellite in the outer space. Examples of the prior art of this type of dual-mode type terminals are proposed, for example, by Japanese Patent Laid-Open Publication Nos. HEI10-243453, HEI10-256939, and HEI10-294608; GB2314483A, and Japanese Patent Laid-Open Publication No. HEI5-153026.

Of these publications, Japanese Patent Laid-Open Publication No. HEI10-243453 aims at reduction of weight and discloses a mobile wireless terminal of dual-mode type comprising a main terminal section including a mobile satellite communication terminal function and a ground wave portable terminal section including a ground wave mobile terminal function characterized in that an engaging depression section and an engaging projection section are disposed in the respective terminal sections to mechanically link the terminal sections with each other, and that connector sections are disposed in the respective terminal sections to electrically connect, when the sections are linked with each other, an audio converter unit including a key operation unit, a display unit, a microphone and a speaker on the ground wave portable terminal section side to a mobile satellite communication terminal function unit on the main terminal section side.

On the other hand, an example of the prior art regarding structure of an antenna is proposed, for example, in Japanese Patent Laid-Open Publication No. HEI4-134906. The publication aims at implementation in which an antenna for mobile communication and an antenna for mobile satellite communication are able to be commonly used as a transceiver antenna and discloses an antenna device comprising a helical antenna including a plurality of helical conductor wires wound on a cylindrical or conical plane and a branching filter to separate signals of predetermined two frequency bands, characterized in that a linear antenna having an operating frequency equal to an operating frequency of the helical antenna is disposed in the helical conductor wires and that the helical antenna is an antenna for circularly polarized waves and the linear antenna is an antenna for linearly polarized waves.

Moreover, another example of the prior art regarding structure of an antenna is proposed, for example, in Japanese Patent Laid-Open Publication No. HEI5-102717. The publication aims at providing an extendible antenna an discloses an extendible antenna device for wireless telephone comprising a housing of a radio unit having a deep hole with a guide wall to stored substantially overall length of an antenna, a helical antenna which is arranged on a coaxial center at an end edge of an opening of the deep hole and which has a power supplying point at its input terminal point and a rod antenna in which a core wire conductor is entirely covered with an insulating sheath body and which includes a partitioned conductor layer on a surface of its base section, characterized in that there is formed an impedance matching section which is grounded when the rod antenna is drawn toward the outside of the housing and in which each floating electrostatic capacity between a helical conductor of the helical antenna and one of the conductor layer terminates in parallel fashion, and that the power supplying point is moved to a position near an output terminal point of the helical antenna.

Additionally, another example of the prior art regarding structure of an antenna is proposed, for example, in Japanese Patent Laid-Open Publication No. HEI10-290115. The publication aims at miniaturization of an antenna and discloses a common antenna characterized by including a first antenna in which a conductor wire is helically wound on a side surface of a cylinder for operation of circular polarization and a linear second antenna which includes a dielectric substance filled in the cylinder to be retained substantially on a central axis of the first antenna and which is disposed for operation of linear polarization.

Furthermore, another example of the prior art regarding structure of an antenna is proposed, for example, in Japanese Patent Laid-Open Publication No. HEI11-136021. The publication aims at miniaturization of an antenna and discloses a multi-mode antenna characterized by comprising an antenna of helical type in which a wire is helically wound on a cylinder and an antenna of mono-pole type which is disposed in the helical-type antenna along its central axis.

### PROBLEM TO BE SOLVED BY THE INVENTION

However, the examples of the prior art are attended with the following problems.

In the examples of the prior art described in Japanese Patent Laid-Open Publication Nos. HEI10-243453, HEI10-256939, and HEI10-294608, GB2314483A, and Japanese Patent Laid-Open Publication No. HEI5-153026, the antennas of primarily both modes (an antenna for ground communication and an antenna for satellite communication) are mostly arranged at different positions of one terminal in independent states, and hence it is difficult to optimize the reduction in size and volume of the terminal.

Moreover, the example of the prior art described in Japanese Patent Laid-Open Publication No. HEI4-134906 described above is for use in a car, and it is difficult to apply an antenna of the structure to a portable communication terminal. If the antenna is applied to the portable terminal, when systems between which a frequency for satellite communication (1.6 GHz) and a frequency for ground cellular communication (1.5 GHz) independently differ from each other are configured into a dual system, there possibly arises a problem that it is difficult to use the same helical structure depending on cases according to the technique described in the publication.

Furthermore, the example of the prior art described in Japanese Patent Laid-Open Publication Ser. No. 5-102717 described above has structure in which a rod antenna is arranged in a helical antenna; however, the helical antenna for satellite communication is fixed in the configuration, and hence there is a problem that the antenna cannot cope with requirement for expansion and contraction. Additionally, to implement the structure, it is necessary to dispose, in addition to the deep hole for guide to store the rod antenna in the housing, a cable insertion hole to insert a power supply cable therethrough; moreover, it is required to dispose an elastic stopper and a stopper engaging section in the base section of the rod antenna, which leads to a problem of complicated structure.

Moreover, in the example of the prior art described in Japanese Patent Laid-Open Publication No. HEI10-290115 described above, both antennas are fixedly arranged and hence there remains a problem regarding independent and normal emission from each thereof. Furthermore, there also remains a problem regarding storability of the first antenna (satellite antenna).

Furthermore, the example of the prior art described in Japanese Patent Laid-Open Publication No. HEI11-136021 described above has structure in which both antennas are fixed onto a housing of a radio unit, which leads to a problem of deterioration in portability.

It is an object of the present invention to provide a mobile satellite communication terminal and a method of using the same in which dual-mode communication is possible using one terminal and in which volume of the terminal is reduced, also when the user carries about the terminal, by storing and by installing the antennas of both modes on one axis in a configuration simpler than that of the prior art.

### DISCLOSURE OF THE INVENTION

The present invention comprises a ground antenna to communicate linear polarization wave signals and a satellite antenna to communicate circular polarization wave signals, the terminal having a ground terminal function to conduct communication via said ground antenna and a ground base station and a satellite terminal function to conduct communication via said satellite antenna and a satellite, characterized in that said satellite antenna is configured in a shape of a hollow cylinder and said ground antenna is arranged in a hollow section of said satellite antenna; moreover, said satellite antenna is configured to be housed into and to be drawn from a communication terminal housing, and there are also configured a conductor wire winding section in which a conductor wire is helically wound on a cylinder surface and an antenna feeder section which is integrally disposed in a lower section of said conductor wire winding section and in that circuits are formed on a cylinder surface.

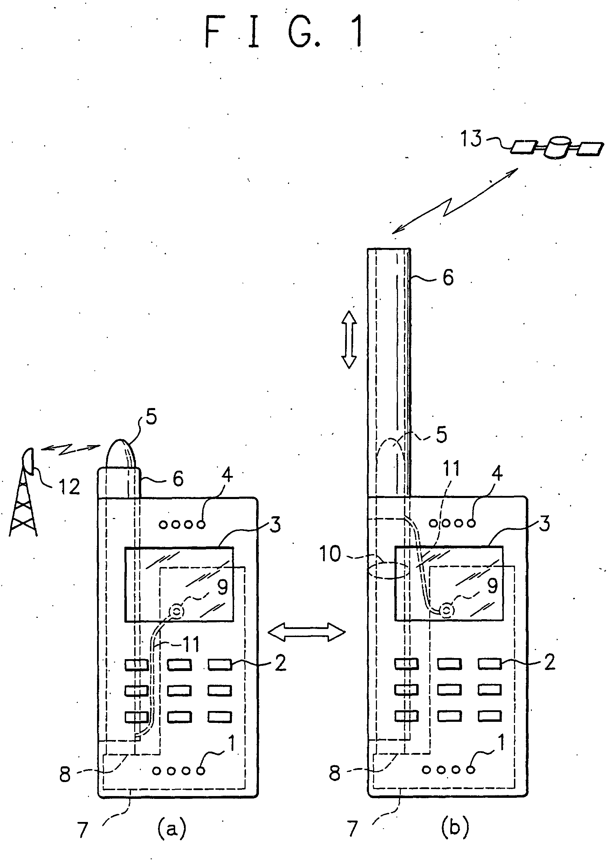

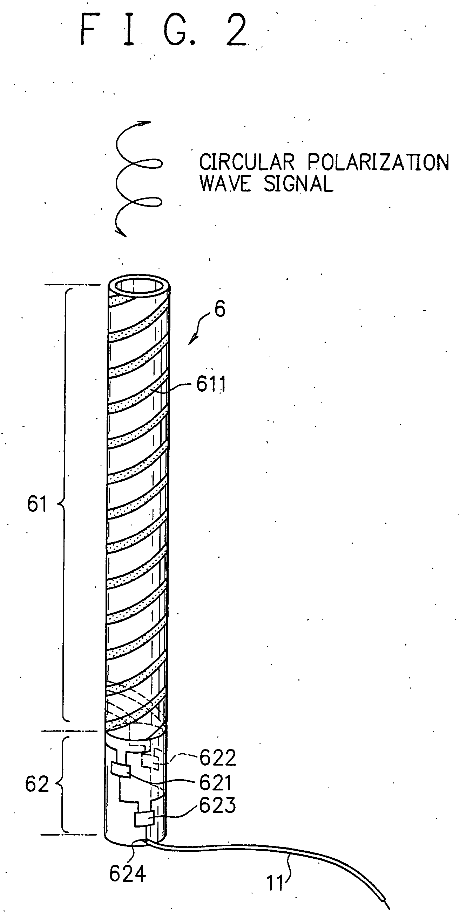

Additionally, mobile satellite communication terminal includes, when described by referring to Figs. 1 and 2, a ground antenna (5 of Fig. 1) to communicate linear polarization wave signals and a satellite antenna (6 of Fig. 6) to communicate circular polarization wave signals, the terminal having a ground terminal function to conduct communication via said ground antenna and a ground base station (12 of Fig. 1) and a satellite function to conduct communication via said satellite antenna and a satellite (13 of Fig. 1), characterized in that said satellite antenna is configured in a shape of a hollow cylinder and said ground antenna is arranged in a hollow section of said satellite antenna; moreover, said satellite antenna is configured to be housed into and to be drawn from a communication terminal housing, and there are also configured a conductor wire winding section (61 of Fig. 2) in which a conductor wire (611) is helically wound on a cylinder surface and an antenna feeder section (62 of Fig. 2) which is integrally disposed in a lower section of said conductor wire winding section and in which circuits (621, 622, and 623 of Fig. 2) are formed on a cylinder surface.

### OPERATION

The mobile satellite communication terminal of the present invention has a configuration in which the satellite antenna used to communicate circular polarization wave signals with a satellite is constructed in a hollow cylindrical shape, the satellite antenna is constructed to be expandable and contractible, and the ground antenna used to communicate linearly polarized wave signals is fixedly arranged in the hollow section of the satellite antenna. Therefore, when compared with a case in which a ground antenna and a satellite antenna are independently arranged at different positions of the communication terminal housing and with a case in which the rod antenna is housed in the helical antenna according to the examples of the prior art, the volume of the housing can be reduced, also when the user carried about the terminal, in a configuration simpler than that of the prior art.

### BRIEF DESCRIPTION OF DRAWINGS

Fig. 1 is an explanatory diagram showing structure of a mobile satellite communication terminal of dual-mode type in an embodiment of the present invention, (a) is an explanatory diagram showing a state in which a satellite antenna is housed in a terminal housing, and (b) is an explanatory diagram showing a state in which the satellite antenna is drawn upward from the terminal housing.
Fig. 2 is a perspective view showing structure of a satellite antenna of a mobile satellite communication terminal of dual-mode type in an embodiment of the present invention.

In this regard, reference numerals 5 to 13 of Fig. 1 respectively show a ground antenna, a satellite antenna, an internal substrate, a connecting section of an internal substrate of a ground antenna, a connecting section of an internal substrate of a satellite antenna, an internal guide for satellite antenna, a flexible cable, a base station for ground terminals, and a satellite; and reference numerals 61, 62, 611, 621, 622, 623, and 624 of Fig. 2 respectively mean a 4-wire helical antenna element section, an antenna feeder section, a conductor wire, first 90° hybrid circuit, a second 90° hybrid circuit, a balanced/unbalanced conversion circuit, and a power supply point.

### BEST MODE FOR CARRYING OUT THE INVENTION

### [First embodiment]

Next, referring to the drawings, description will be given in detail of a first embodiment of the present invention.

### (1) Description of Configuration

The mobile satellite communication terminal of dual-mode type (to be abbreviated. as a mobile satellite communication terminal hereinbelow) in the embodiment of the present invention is equipped, as shown in Fig. 1, in respective sections of a terminal housing, with a microphone 1, a keyboard 2, a display 3, a speaker 4, an antenna for ground cellular terminals (to be abbreviated as a ground antenna hereinbelow) 5, an helical antenna for satellite communication (to be abbreviated as a satellite antenna hereinbelow) 6, and an internal substrate 7. In the diagram, 8 is a connecting section of ground antenna inner substrate, 9 is a connecting section of satellite antenna inner substrate, 10 is a satellite antenna inner guide, 11 is a flexible cable, 12 is a base station for ground terminals, and 13 is a satellite.

More specifically, in the configuration, the microphone 1 inputs voice to be transmitted from a user of the mobile satellite communication terminal to a communication partner. The keyboard 2 is used to input a telephone number and to conduct various setting operations. The display 3 displays a date, a time, a telephone number, various messages, and the like. The speaker 4 outputs voice received from the communication partner. The ground antenna 5 communicates, when the mobile satellite communication terminal is used as a ground terminal, linearly polarized wave signals via the base station for ground terminals 12. The satellite antenna 6 communicates, when the mobile satellite communication terminal is used as a satellite terminal, circular polarization wave signals via the satellite 13. In this embodiment, the ground antenna 5 and the satellite antenna 6 are arranged at left-side edge section on a front side of the communication terminal.

The satellite antenna 6 has a shape of a hollow cylinder having an inner diameter capable of passing the ground antenna 5 therethrough and is arranged in a state to surround an outer circumference of the ground antenna 5 and is constructed to be expandable and contractible in a direction of an arrow mark shown in the drawing. Moreover, there is arranged in the terminal housing the satellite antenna inner guide 10 to guide the satellite antenna 6 when the satellite antenna 6 is housed in the terminal housing. The ground antenna 5 is set to a state such that an upper section of the ground antenna 5 projects from an upper edge section of the satellite antenna 6 when the satellite antenna 6 is housed in the terminal housing.

The inner substrate 7 is housed in the terminal housing, and there are mounted on the inner substrate 7 various electronic parts constructing an RF (radio frequency)/ IF (intermediate frequency) circuit, a common base-band circuit, an interface circuit, a signal processing/ codec (coder-decoder) circuit, and the like. Additionally, there are disposed on the inner substrate 7 the ground antenna inner substrate connecting section 8 to which a terminal of the ground antenna 5 is connected and the satellite antenna inner substrate connecting section 9 to which a terminal of the satellite antenna 6 is connected via the flexible cable 11.

Furthermore, the satellite antenna 6 of the mobile satellite communication terminal in the embodiment of the present invention shown in Fig. 1 includes a 4-wire helical antenna element section 61 constituting an antenna upper section and an antenna feeder section 62 constituting an antenna lower section as shown in Fig. 2.

In the above configuration, described in more detail, the 4-wire helical antenna element section 61 and the antenna feeder section 62 constituting the satellite antenna 6 are integrally configured using one material as shown in Fig. 2. The 4-wire helical antenna element section 61 includes a conductor wire 611 helically wound on a surface of a hollow cylinder. The antenna feeder section 62 comprises a first 90° hybrid circuit 621 including a distribution constant circuit/concentration constant circuit, a second 90° hybrid circuit 622 including a distributed constant circuit/concentrated constant circuit, and a balanced/unbalanced conversion circuit 623, and these circuits are arranged on a surface of a substrate having a shape of a hollow cylinder. Moreover, the flexible cable 11 is connected to a power supply point 624 in a lowest section of the antenna feeder section 62. In the drawing, an arrow mark indicates a circular polarization wave signal communicated between the satellite antenna 6 and a satellite.

When the mobile satellite communication terminal of the above configuration is used as a ground terminal, the communication is conducted in a state in which the satellite antenna 6 is housed in the terminal housing such that the ground antenna 5 projects into outward section as shown in Fig. 1(a). Moreover, when the mobile satellite communication terminal of dual-mode type is used as a satellite terminal, the communication is conducted in a state in which the satellite antenna 6 is drawn from. the terminal housing and is extended to upward section as shown in Fig. 1(b).

That is, the positional relationship between both antennas, i.e., the ground antenna 5 and the satellite antenna 6 relative to the housing of the mobile satellite communication terminal is as shown in Fig. 2 in which the satellite antenna 6 used to communicate circular polarization wave signals between the mobile satellite communication terminal and the satellite 13 is constructed in a shape of a hollow cylinder and the ground antenna 5 used to communicate linear polarization wave signals is fixedly arranged in a hollow section inside the satellite antenna 6 as shown in Fig. 1 in the configuration. Additionally, a projection section is disposed in a bottom section of the satellite antenna 6 and a stopper is disposed at a drawing limit point thereof in the configuration such that when the satellite antenna 6 is drawn, the projection section hits the stopper so that the satellite antenna 6 is not drawn exceeding the 4-wire helical antenna element section 61.

In addition, in the connecting configuration of both antennas, in which the ground antenna 5 and the satellite antenna 6 into the communication terminal housing as shown in Fig. 1, the ground antenna 5 is fixedly connected to the inner substrate via a coaxial section and the satellite antenna 6 is disposed in a direction perpendicular to be slidable as a guide which is the inner diameter of the hole (satellite antenna inner guide 10) disposed in the terminal housing and is an outer circumference of the ground antenna 5 in an inner side, and the satellite antenna 6 is connected via the flexible cable 11 to the inner substrate 7.

### (2) Description of operation

Next, referring to Figs. 1 and 2, description will be given in detail of operation of the mobile satellite communication terminal of the present invention.

When the mobile satellite communication terminal is used as a ground terminal, the communication is conducted in a state in which the satellite antenna 6 is housed in the inside of the terminal housing such that the ground antenna 5 projects upward from an upper end section of the satellite antenna 6 in the upper direction as shown in Fig. 1(a). On the other hand, when the mobile satellite communication terminal is used as a satellite terminal, the communication is conducted in a state in which the satellite antenna 6 is drawn from the inside of the terminal housing and is extended in the upper direction as shown in Fig. 1(b).

That is, in this embodiment, the satellite antenna 6 used to communicate circular polarization wave signals with the satellite is constructed in a shape of a hollow cylinder, the satellite antenna 6 is configured to be expandable and contractible, and the ground antenna 5 used to communicate linear polarization wave signals is fixedly arranged in a hollow section of the satellite antenna 6 in the configuration; therefore, when compared with a case in which a ground antenna and a satellite antenna are independently arranged at different positions of the terminal housing and with a case in which the rod antenna is housed in the helical antenna according to the examples of the prior art, the volume of the housing can be reduced, also when the user carries the terminal, in a configuration simpler than that of the prior art.

### [Second embodiment]

In the configuration of the embodiment of the present invention described above, the grand antenna 5 and the satellite antenna 6 are arranged on the left-side edge section of the terminal housing viewed from a front thereof; however, the present invention is not restricted by this, and there can also be used a configuration in which in consideration of characteristics of both antennas, i.e., the ground antenna 5 and the satellite antenna 6, the grand antenna 5 and the satellite antenna 6 are arranged in a central section of the terminal housing or on the right-side edge section of the terminal housing.

Additionally, as the mobile satellite communication terminal of dual-mode type, there are provided both functions of a ground terminal and a satellite terminal; therefore, both functions cannot be simultaneously operated; however, during reception wait time, the ground antenna can be activated, and further, can be also a reception state by switching between both functions of the ground terminal and the satellite terminal at an interval of a predetermined period of time. In this situation, there is disposed, for example, for each of the ground and satellite antennas, a change-over switch including a pin diode disposed in a high-frequency input stage, not shown, to conduct a change-over operation, during the reception wait time, between outputs from the respective high-frequency amplifying stages including a mixer so as to conduct demodulation during respective wait time by use of a common intermediate-frequency stage. According to data after the demodulation, if an identifier indicates the own device and if the ground terminal function is assumed, a telephone call can be received by depressing a reception confirmation button; and if the satellite terminal function is assumed for the reception, the user depresses the same reception confirmation button and drawing the satellite antenna to extend the satellite antenna so that the user continues a telephone call of reception and transmission by improving reception sensibility.

### INDUSTRIAL APPLICABILITY

As described above, in accordance with the present invention, since the satellite antenna used to communicate circular polarization wave signals with the satellite is constructed in a shape of a hollow cylinder, the satellite antenna is configured to be expandable and contractible, and the ground antenna used to communicate linear polarization wave signals is fixedly arranged in a hollow section of the satellite antenna in the configuration; the dual-mode communication can be conducted by one terminal; moreover, the antennas of both modes, i.e., the ground antenna and the satellite antenna are housed and arranged on one axis, which hence leads to an advantage that it is possible to provide a mobile satellite communication terminal in which the volume can be reduced, also when the user carries about the terminal, in a configuration simpler than that of the prior art.

## Claims

1. A mobile satellite communication terminal comprising a ground antenna to communicate linear polarization wave signals and a satellite antenna to communicate circular polarization wave signals, the terminal having a ground terminal function to conduct communication via said ground antenna and a ground base station and a satellite terminal function to conduct communication via said satellite antenna and a satellite, **characterized in that**
said satellite antenna is configured in a shape of a hollow cylinder and said ground antenna is arranged in a hollow section of said satellite antenna; moreover, said satellite antenna is configured to be housed into and to be drawn from a communication terminal housing, and there are also configured a conductor wire winding section in which a conductor wire is helically wound on a cylinder surface and an antenna feeder section which is integrally disposed in a lower section of said conductor wire winding section and in which circuits are formed on a cylinder surface.

2. A mobile satellite communication terminal in accordance with claim 1, **characterized in that** an inner substrate including a communication control circuit and a signal processing circuit and an inner guide section through which said satellite antenna can pass are disposed in said communication terminal housing, said satellite antenna is connected via a flexible cable to a satellite antenna connecting section of said inner substrate and said ground antenna is connected to a ground antenna connecting section of said inner substrate; moreover, said satellite antenna can be housed therein/drawn therefrom using, as a guide, an inner diameter section of said inner guide section and an outer circumference of said ground antenna.

3. A mobile satellite communication terminal in accordance with claim 1 or 2, **characterized in that** said antenna feeder section of said satellite antenna includes, as said circuits, a balanced/unbalanced conversion circuit and a hybrid circuit including a distributed constant circuit and a concentrated constant circuit, and a power supply point to which a flexible cable is connected is disposed in a lowest section of said antenna feeder section.

4. A mobile satellite communication terminal in accordance with one of claims 1 to 3, **characterized in that** when said ground terminal function is used, said satellite antenna is housed in the inside of said communication terminal housing and said ground antenna is set in a state in which part of said ground antenna projects upwards from an upper edge section of said satellite antenna in an upper direction, and when said satellite terminal function is used, said satellite antenna is drawn upwards from said communication terminal housing in an upper direction to be set to an extended state.

5. A mobile satellite communication terminal in accordance with one of claims 1 to 4, **characterized in that** said ground antenna and said satellite antenna are arranged in a left-side edge section, a right-side edge section, or a central section of said communication terminal housing.

6. A method of using a mobile satellite communication terminal comprising a ground antenna to communicate linear polarization wave signals and a satellite antenna to communicate circular polarization wave signals, the terminal having a ground terminal function to conduct communication via said ground antenna and a ground base station and a satellite function to conduct communication via said satellite terminal antenna and a satellite, **characterized in that**
when said ground terminal function is used, the communication is conducted in a state in which said satellite antenna is housed in the inside of said communication terminal housing and part of said ground antenna projects upward from an upper edge section of said satellite antenna, and when said satellite terminal function is used, the communication is conducted in a state in which said satellite antenna is drawn upward from said communication terminal housing to be extended.
